# EUROPEAN PATENT SPECIFICATION

(11) **EP 2 362 495 B1**
(45) Date of publication and mention of the grant of the patent: **19.09.2012**
(21) Application number: 11000617.8
(22) Date of filing: 26.01.2011
(51) Int. Cl.: H01R 13/52, H01R 13/631, H01R 13/627

(54) **Charging connector and method of providing it**
Ladestecker und Verfahren zu seiner Bereitstellung
Connecteur d'alimentation et son procédé de fabrication

(30) Priority: 19.02.2010 JP 2010034832
(43) Date of publication of application: 31.08.2011
(73) Proprietor: Sumitomo Wiring Systems, Ltd., Yokkaichi-city, Mie 510-8503 (JP)
(72) Inventor: Takada, Akinori, Yokkaichi-City Mie 510-8503 (JP); Ichio, Thoshifumi, Yokkaichi-City Mie 510-8503 (JP)
(74) Representative: Müller-Boré & Partner Patentanwälte

(56) References cited:
- EP-A2- 0 630 078
- DE-A1- 4 447 023

## Description

The present invention relates to a charging connector connectable to a vehicle-side connector provided in a vehicle and to a method of providing or manufacturing or producing it.

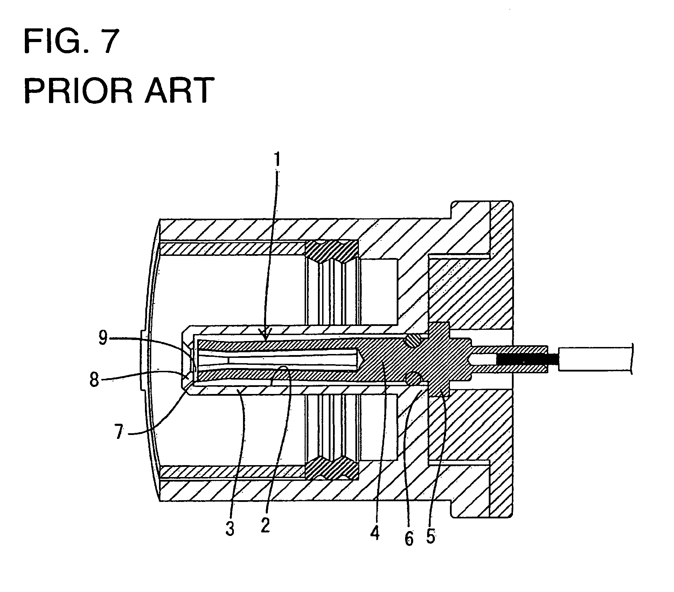

A charging connector of this type is, for example, known from Japanese Unexamined Patent Publication No. H07-67210. This connector includes a terminal fitting 1 connectable to a vehicle-side terminal provided in the vehicle-side connector and a terminal accommodating portion 3 internally formed with a cavity 2 for accommodating the terminal fitting 1 as specifically shown in FIG. 7. The terminal fitting 1 includes a tubular main portion 4 connectable to the vehicle-side terminal, and a flange portion 5 is so circumferentially provided as to project from the outer circumferential surface of this tubular main portion 4. On the other hand, the cavity 2 has an open rear end, and the terminal fitting 1 is inserted forward through this rear end opening. When the terminal fitting 1 is accommodated into the cavity 2, the flange portion 5 comes into contact with a rear end opening edge 6 of the cavity 2, thereby preventing the terminal fitting 1 from moving any further forward.

Since such a charging connector assumes outdoor use, a muddy water test is conducted in which the charging connector is dried after being immersed in muddy water and then repeatedly connected to and separated from the vehicle-side connector. Thus, the charging connector is required to have durability for the muddy water test.

However, in a state where the terminal fitting 1 is stopped at its front end position by the flange portion 5, a clearance 9 is formed between a front end 7 of the main portion 4 and a front wall 8 of the cavity 2 and it becomes easier for muddy water or the like to enter the clearance 9. Here, even if a water drain hole is formed below the clearance 9 (lower side of the front end of the cavity 2) to drain the muddy water to the outside, the muddy water cannot be efficiently drained to the outside of the cavity 2 since surface tension acts on the muddy water. When the muddy water is dried, mud deposits on a contact portion between the terminal fitting 1 and the vehicle-side terminal. Thus, if the connector is repeatedly connected and separated, plating of the contact portion may be peeled off or terminal surfaces may be scratched.

The present invention was developed in view of the above situation and an object thereof is to efficiently drain muddy water to the outside of a cavity.

This object is solved according to the invention by the features of the independent claims. Preferred embodiments of the invention are subject of the dependent claims.

Accordingly, muddy water is efficiently drained to the outside of a cavity by eliminating a clearance, thereby protecting terminal surfaces.

According to the invention, there is provided a charging connector connectable to a vehicle-side connector provided in or at a vehicle, comprising:
a terminal fitting including a main portion connectable to a vehicle-side terminal provided in the vehicle-side connector and having an end of a wire connected to the main portion,
a terminal accommodating portion internally formed with a cavity for at least partly accommodating the terminal fitting,
a seal member able to seal the terminal fitting, and
a wire accommodating portion provided behind the terminal accommodating portion for at least partly accommodating the wire in a state where a reaction force capable of pushing the terminal fitting substantially forward is produced,
wherein the terminal fitting is constantly biased substantially forward by the reaction force of the wire against a frictional force with the seal member.

According to a preferred embodiment of the invention, the seal member is to be sandwiched between facing surfaces of an inner wall of the cavity and the main portion to seal between the facing surfaces over the entire circumference.

Preferably, the terminal fitting being constantly biased substantially forward by the reaction force of the wire against a frictional force with the seal member causes the terminal fitting to be arranged at a frontmost position where the front end of the main portion and the front wall of the cavity facing the front end of the main portion substantially are in contact.

According to a further preferred embodiment, there is provided a charging connector connectable to a vehicle-side connector provided in a vehicle, comprising:
a terminal fitting including a main portion connectable to a vehicle-side terminal provided in the vehicle-side connector and having an end of a wire connected to the rear end of the main portion,
a terminal accommodating portion internally formed with a cavity for accommodating the terminal fitting,
a seal member to be sandwiched between facing surfaces of an inner wall of the cavity and the main portion to seal between the facing surfaces over the entire circumference, and
a wire accommodating portion provided behind the terminal accommodating portion for accommodating the wire in a state where a reaction force capable of pushing the terminal fitting forward is produced,
wherein the terminal fitting is constantly biased forward by the reaction force of the wire against a frictional force with the seal member, thereby being arranged at a frontmost position where the front end of the main portion and the front wall of the cavity facing the front end of the main portion are in contact.

According to this construction, no clearance is formed between the front end of the main portion and the front wall of the cavity since the front end of the main portion and the front wall of the cavity are in contact. Thus, in the case of conducting a muddy water test, a situation can be avoided where muddy water enters the clearance and cannot be easily drained to the outside of the cavity. Therefore, the muddy water can be efficiently drained to the outside of the cavity by eliminating the clearance, thereby protecting terminal surfaces.

The present invention is preferably embodied to have the following constructions.

The charging connector may further comprise a retaining portion provided behind the terminal accommodating portion for retaining the terminal fitting at least partly accommodated in the cavity by being engaged from behind with a flange portion circumferentially provided to project from the terminal fitting, preferably from the outer circumferential surface of the main portion thereof.

In a state where the vehicle-side terminal at least partly is fitted in the main portion, the terminal fitting may be arranged at a rearmost position where the flange portion and the retaining portion are engaged.

The charging connector may further comprise a retaining portion provided behind the terminal at least partly accommodating portion for retaining the terminal fitting accommodated in the cavity by being engaged from behind with a flange portion circumferentially provided to project from the outer circumferential surface of the main portion and, in a state where the vehicle-side terminal is fitted in the main portion, the terminal fitting may be arranged at a rearmost position where the flange portion and the retaining portion are engaged.

According to this construction, the terminal fitting can be prevented from coming out backward by the engagement of the flange portion with the retaining portion.

The main portion may include at least one contact piece which resiliently comes into contact with the vehicle-side terminal, and the vehicle-side terminal and the contact piece may slide as the vehicle-side terminal and the main portion are connected and separated.

According to this construction, a wiring effect can be displayed by sliding movements of the vehicle-side terminal and the contact piece. In other words, even if dust or the like deposits on the terminal surfaces, it can be wiped off by the wiping effect.

The terminal fitting may be movable back and forth between the frontmost position and the rearmost position as being connected to and separated from the vehicle-side terminal.

For example, if the retaining portion is formed such that the leading end thereof is pivotally displaceable, the retaining portion is pushed by the flange portion and the leading end thereof is displaced along its pivot path when the terminal fitting is accommodated into the cavity. When the flange portion moves beyond the retaining portion, the leading end of the retaining portion returns along its pivot path. Since the leading end of the retaining portion moves away from the flange portion along its pivot path during a returning movement, a tiny clearance is formed between the flange portion and the leading end of the retaining portion. In other words, the terminal fitting needs to be movable back and forth at the very least by as much as the clearance to allow the retaining portion to return. In this respect, according to the above construction, the terminal fitting is movable back and forth between the frontmost position and the rearmost position, wherefore the clearance can be ensured and the retaining portion can reliably return.

A frictional force between the vehicle-side terminal and the main portion may be larger than the reaction force received from the wire.

The frictional force of the seal member may be adjusted by an oil or lubricant content amount thereof.

According to the invention, there is further provided a method of providing or manufacturing or producing a charging connector, in particular according to the above aspect of the invention or a preferred embodiment thereof, in view of connecting it to a vehicle-side connector provided in or at a vehicle, comprising the following steps:
providing a terminal fitting including a main portion connectable to a vehicle-side terminal provided in the vehicle-side connector and having an end of a wire connected to the main portion,
internally forming a terminal accommodating portion with a cavity for at least partly accommodating the terminal fitting,
sealing the terminal fitting by means of a seal member,
providing a wire accommodating portion behind the terminal accommodating portion for at least partly accommodating the wire in a state where a reaction force capable of pushing the terminal fitting substantially forward is produced, and
constantly biasing the terminal fitting substantially forward by the reaction force of the wire against a frictional force with the seal member.

The present invention is preferably embodied as follows.

The seal member may be sandwiched between facing surfaces of an inner wall of the cavity and the main portion to seal between the facing surfaces over the entire circumference.

By constantly biasing the terminal fitting substantially forward by the reaction force of the wire against a frictional force with the seal member the terminal fitting may be arranged at a frontmost position where the front end of the main portion and the front wall of the cavity facing the front end of the main portion substantially are in contact.

The method according may further comprise a step of providing a retaining portion behind the terminal accommodating portion for retaining the terminal fitting at least partly accommodated in the cavity by being engaged from behind with a flange portion circumferentially provided to project from the terminal fitting, preferably from the outer circumferential surface of the main portion thereof,
wherein, in a state where the vehicle-side terminal at least partly preferably is fitted in the main portion, the terminal fitting is arranged at a rearmost position where the flange portion and the retaining portion are engaged.

The main portion may include at least one contact piece which resiliently comes into contact with the vehicle-side terminal, and
the vehicle-side terminal and the contact piece may slide as the vehicle-side terminal and the main portion are connected and separated.

A frictional force between the vehicle-side terminal and the main portion may be larger than the reaction force received from the wire and/or the frictional force of the seal member may be adjusted by an oil or lubricant content amount thereof.

According to the present invention, it is possible to efficiently drain muddy water to the outside of a cavity by eliminating a clearance, thereby protecting terminal surfaces.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a side view showing a charging connector according to an embodiment,
FIG. 2 is a front view showing the charging connector,
FIG. 3 is a section showing a state before a vehicle-side connector and the charging connector are connected,
FIG. 4 is a section showing a state where the vehicle-side connector and the charging connector are connected,
FIG. 5 is an enlarged section simply showing a state before a vehicle-side terminal and a terminal fitting are connected,
FIG. 6 is an enlarged section simply showing the state where the vehicle-side terminal and the terminal fitting are connected, and
FIG. 7 is a side view showing a conventional charging connector.

### <Embodiment>

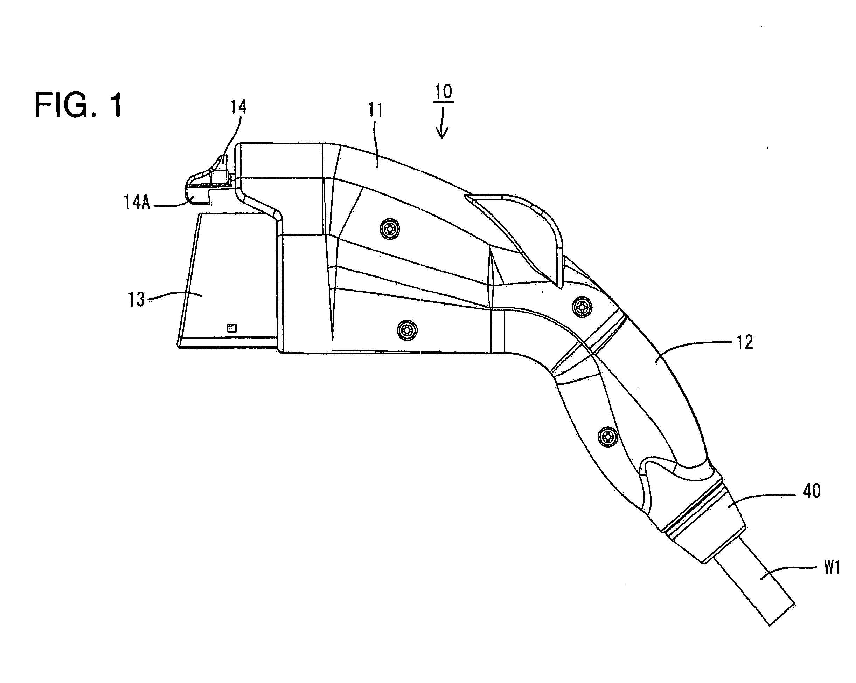

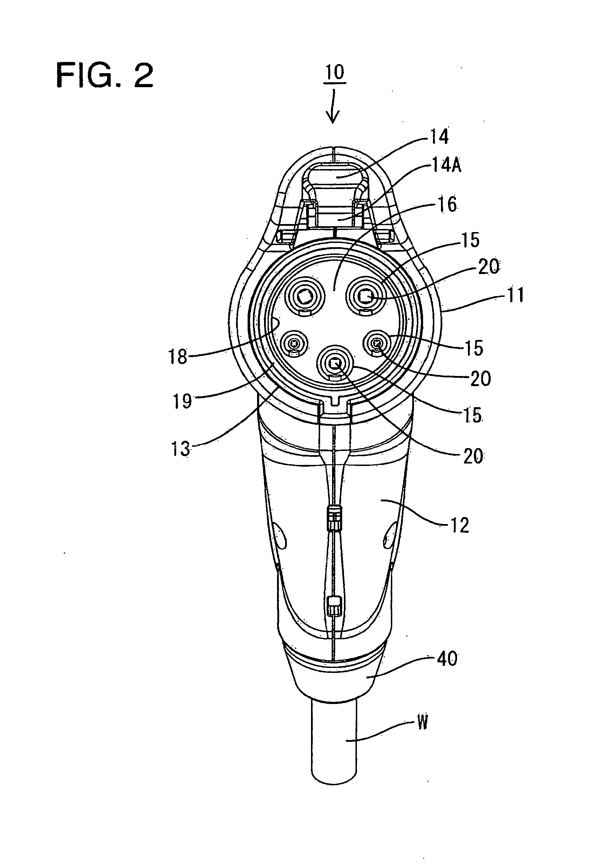

An embodiment of the present invention is described with reference to FIGS. 1 to 6. A charging connector 10 of this embodiment particularly is connectable with a vehicle-side connector 50. It should be noted that in the following a front side or a forward direction is referred to a connection direction of the charging connector 10 with the vehicle-side connector 50. The charging connector 10 substantially is gunshaped as a whole and formed with a connector main body 11 constituting substantially a front portion (particularly a front half) and a grip 12 extending obliquely downward from a rear part of this connector main body 11 as shown in FIG. 1. The connector main body 11 and the grip 12 particularly are both made of synthetic resin and/or integrally or unitarily molded. A substantially tubular receptacle 13 substantially projecting forward is mounted on or at the front surface of the connector main body 11. Further, a lever 14 is mounted on or to the connector main body 11 (particularly at least partly accommodated at an upper side of the interior of the connector main body 11), and a distal or front end portion thereof is exposed to the outside from the connector main body 11 (particularly the front edge of the upper surface of the connector main body 11). As shown in FIG. 2, the connector main body 11 has an outer peripheral shape substantially in conformity with the outer circumferential surface of the receptacle 13 and a part thereof corresponding to the lever 14 projects outward or upward.

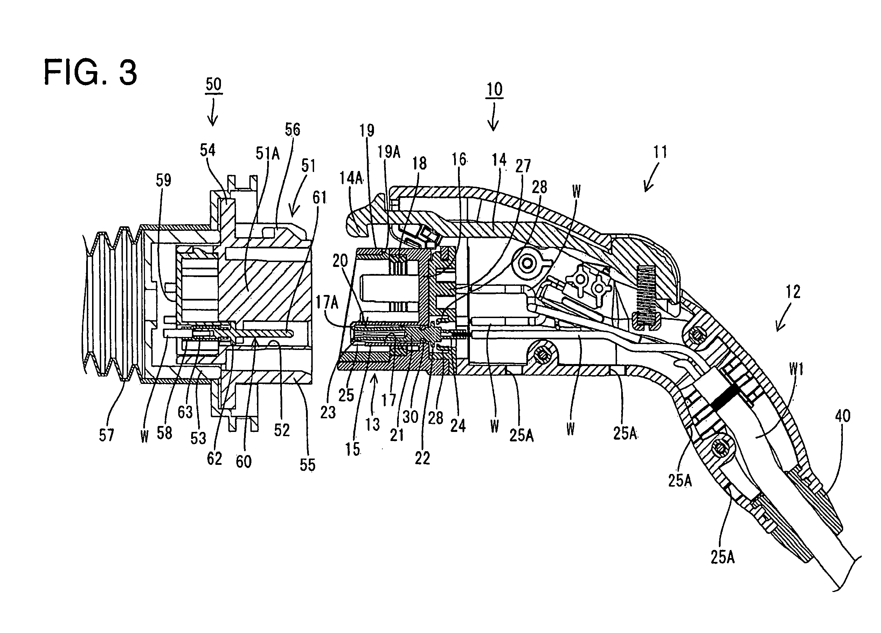

As shown in FIG. 3, the receptacle 13 particularly is formed as a separate member from the connector main body 11, and fixed or mounted to the connector main body 11 by an unillustrated locking means. One or more, particularly a plurality of cylindrical terminal accommodating portions 15 are provided in the receptacle 13. These one or more terminal accommodating portions 15 substantially project forward from a back wall 16 of the receptacle 13. One or more cavities 17 for at least partly accommodating one or more terminal fittings 20 are formed in the terminal accommodating portion(s) 15.

The (particularly each) cavity 17 is open at (particularly the rear surface of the back wall 16 of) the receptacle 13. The cavity 17 is a space for at least partly accommodating the terminal fitting 20, and this space is formed by the inner wall of the terminal accommodating portion 15. On the other hand, a front wall 17A of the cavity 17 can come into contact with (particularly the front end of) the terminal fitting 20 substantially inserted forward through the rear end opening of the cavity 17. The terminal fitting 20 particularly is prevented from moving any further forward by this contact. An insertion hole, through which a vehicle-side terminal 60 to be described later is at least partly insertable, is formed to penetrate through the front wall 17A of the cavity 17. Further, at least one water drain hole 25 is formed to penetrate through a lower side of the front end of the inner wall of the cavity 17. Water having entered the cavity 17 is or may be drained to the outside through the at least one water drain hole 25.

A cylindrical rubber ring 18 (as a preferred resilient ring) is mounted along the inner circumferential surface of the receptacle 13 in the receptacle 13, and a holder 19 for retaining the rubber ring 18 is mounted before the rubber ring 18. The holder 19 particularly has the substantially same cylindrical shape as the rubber ring 18 and includes at least one locking portion 19A engageable with the inner side of the receptacle 13. The holder 19 is to be substantially mounted along the inner circumferential surface of the receptacle 13 by this locking portion 19A.

A mounting portion for the holder 19 on the inner circumferential surface of the receptacle 13 particularly has a larger diameter than the back side of the holder 19. By mounting the holder 19, the inner circumferential surface of the holder 19 and the inner circumferential surface of the receptacle 13 substantially behind the rubber ring 18 are substantially flush. One or more lip portions of the rubber ring 18 project radially inwardly of the inner circumferential surface of the holder 19. On the other hand, the vehicle-side connector 50 includes a vehicle-side housing 51 connectable to the charging connector 10. The vehicle-side housing 51 particularly is made of synthetic resin and includes a housing main body 51 A at least partly fittable into the receptacle 13. Thus, when the housing main body 51 A is or may be at least partly fitted into the receptacle 13, the outer circumferential surface of the housing main body 51 A comes into close contact with (particularly the lip portions of) the rubber ring 18, thereby providing waterproofing between the two connectors 10 and 50.

One or more vehicle-side cavities 52 for at least partly accommodating one or more corresponding vehicle-side terminals 60 are formed in the housing main body 51 A. The vehicle-side housing 51 is to be mounted in or to a mounting opening portion 53 formed in a vehicle body. A mounting plate 54 is formed to project from the outer circumferential surface of the vehicle-side housing 51, and the vehicle-side housing 51 is to be mounted and fixed to the mounting opening portion 53 by placing this mounting plate 54 substantially along the opening edge of the mounting opening portion 53 and fixing (particularly bolting) it.

A fitting tube portion 55 is circumferentially provided on the outer circumferential surface of the housing main body 51A. This fitting tube portion 55 projects substantially forward from the mounting plate 54, so that the receptacle 13 is at least partly fittable between the housing main body 51 A and the fitting tube portion 55. A lock projection 56 is provided on (particularly the upper surface of) the fitting tube portion 55. This lock projection 56 is engageable (particularly substantially in a connecting direction) with a lever-side projection 14A projecting from (particularly the lower surface of the leading end of) the lever 14. Accordingly, when the two connectors 10, 50 are connected, the lever-side projection 14A is engaged with the lock projection 56, whereby the two connectors 10, 50 are held connected. Note that a bellows-like grommet 57 substantially extending backward is mounted on (particularly a rear part of) the mounting opening portion 53.

Each vehicle-side terminal 60 particularly has a pin-like male-side main portion 61, and a male-side flange portion 62 is so circumferentially provided as to project from the outer circumferential surface of this male-side main portion 61. The male-side flange portion 62 substantially is in contact with (particularly the rear wall of) the vehicle-side cavity 52 (particularly substantially from behind), and the male-side main portion 61 is at least partly accommodated into the vehicle-side cavity 52 particularly through this rear wall. A wire connection portion (particularly comprising a cylindrical male-side barrel portion 63) is formed at a rear end portion of the male-side main portion 61, and a core of a wire W is connected with the wire connection portion, particularly by being placed in this male-side barrel portion 63 and fixed by crimping, bending or folding. Further, a heat shrinkable tube 58 is so mounted as to at least partly cover the wire connection portion (particularly a crimping part) of the male-side barrel portion 63. The crimping part of the male-side barrel portion 63 is protected from water by this heat shrinkable tube 58. A vehicle-side retainer 59 for preventing the one or more vehicle-side terminals 60 from coming out backward by being engaged with the male-side flange portions 62 of the vehicle-side terminals 60 from behind is mounted in (particularly a rear part of) the vehicle-side housing 51.

Next, a surrounding structure of the terminal fitting 20 of the charging connector 10 is described. The terminal fitting 20 particularly includes a female-side main portion 21 with a plurality of contact pieces 23. The plurality of contact pieces 23 are formed by forming slits intermittently in a circumferential direction. The slits are formed to substantially extend backward from the front end opening edge of the female-side main portion 21 having an open front end. The terminal of this type is called a slotted terminal or the like in some cases. Further, a female-side flange portion 22 is circumferentially provided at (particularly a rear side of the outer circumferential surface of) the female-side main portion 21. This female-side flange portion 22 is arranged to substantially face the rear end opening edge of the cavity 17 while being spaced apart therefrom by a specified (predetermined or predeterminable) distance.

A retainer 27 is mounted behind the receptacle 13. This retainer 27 includes one or more insertion holes, through which the one or more respective terminal fittings 20 are to be at least partly inserted. One or more, particularly a pair of (upper and lower) retaining pieces 28, which are to be engaged with the corresponding female-side flange portion 22 particularly substantially from behind, are provided to substantially project forward from an inner wall of the insertion hole. When the terminal fitting 20 is to be at least partly inserted into the cavity 17 (particularly substantially from behind), the both retaining pieces 28 are pressed by the female-side flange portion 22 and the leading ends thereof are displaced outwardly along their pivot paths. When the female-side flange portion 22 moves beyond the both retaining pieces 28, the leading ends of the both retaining pieces 28 substantially are displaced inwardly along their pivot paths and the both retaining pieces 28 resiliently return. During returning movements, the leading ends of the both retaining pieces 28 move away from the female-side flange portion 22 along the pivot paths, wherefore tiny clearances are formed between the female-side flange portion 22 and the leading ends of the both retaining pieces 28. Thereafter, when the terminal fitting 20 is pushed backward, the leading ends of the both retaining pieces 28 substantially come into contact and engagement with the female-side flange portion 22 from behind, thereby preventing a backward movement of the terminal fitting 20.

A seal ring 30 is sandwiched between a wall surface of (particularly the inner wall of) the cavity 17 corresponding to the back wall 16 of the receptacle 13 and (particularly the outer circumferential surface of) the female-side main portion 21 substantially facing this wall surface. The seal ring 30 at least partly is mounted in a seal groove circumferentially formed in the outer circumferential surface of the female-side main portion 21. The seal ring 30 particularly is made of resilient material such as rubber, has a ring shape and/or contains oil or a lubricant. This oil or lubricant makes the seal ring 30 smoothly move on the outer circumferential surface of the female-side main portion 21, and relative movements of the seal ring 30 with respect to the outer circumferential surface of the female-side main portion 21 are prevented by mounting the seal ring 30 into the seal groove. Therefore, the seal ring 30 particularly is sandwiched over the entire circumference between the inner surface of the seal groove and the inner wall of the cavity 17, thereby providing waterproofing between the inner wall of the cavity 17 and the female-side main portion 21.

A wire connection portion (particularly comprising a barrel portion 24) to be connected (particularly fixed) to the core exposed at an end of the wire W is formed behind the female-side main portion 21. The barrel portion 24 particularly has a cylindrical shape and has an open rear end, and is electrically conductively connected to the wire W by being crimped or bent or folded with the core of the wire W at least partly accommodated inside. The wire W substantially extends backward from the barrel portion 24 and is drawn out to the outside through the interiors of the connector main body 11 and the grip 12. Note that a preferred "wire accommodating portion" is formed by an inner space of the connector main body 11 and that of the grip 12.

In this embodiment, one or more, particularly a plurality of wires W substantially extend backward in correspondence with the one or more, particularly plurality of terminal fittings 20, and these wires W particularly are bundled into one cable W1 by being covered by an outer sheath in the grip 12. The cable W1 is fixed by a cable grip ring (not shown) or the like in the grip 12 and further fixed by a bush 40 at or near (particularly a rear end portion of) the grip 12. Since the bush 40 is held substantially in close contact with the inner circumferential surface of the rear end opening of the grip 12 and the outer circumferential surface of the cable W1, water is prevented from entering the interior of the grip 12 through the rear end of the grip 12. Since one or more, particularly a plurality of water drain holes 25A are formed in or near the lower surfaces of the connector main body 11 and the grip 12, water can be allowed to escape to the outside through these water drain holes 25A even if it enters the interiors of the connector main body 11 and the grip 12.

In a state where the cable W1 is fixed in the grip 12, the respective one or more wires W are bent in the connector main body 11 and the one or more respective terminal fittings 20 are constantly biased substantially forward (or toward the vehicle-side connector 50) by reaction forces of the respective wires W. A force for biasing the terminal fitting 20 forward by the reaction force of the wire W particularly is set to be larger than a frictional force of the seal ring 30. Here, the frictional force of the seal ring 30 particularly can be adjusted by an oil or lubricant content amount. As the oil or lubricant content amount of the seal ring 30 increases, the frictional force of the seal ring 30 with the inner wall of the cavity 17 decreases. Accordingly, the frictional force of the seal ring 30 can be set to be smaller than the reaction force of the wire W by increasing the oil or lubricant content amount of the seal ring 30. Thus, in a state shown in FIG. 3 before the two connectors 10, 50 are connected, the terminal fittings 20 are biased substantially forward by the reaction forces of the wires W against the frictional forces of the seal rings 30 and the front ends of the female-side main portions 21 of the terminal fittings 20 substantially are in contact with the front walls 17A of the cavities 17. On the other hand, the female-side flange portions 22 particularly are not in contact with the rear end opening edges of the cavities 17. Therefore, no clearances are formed between the front ends of the female-side main portions 21 and the front walls 17A of the cavities 17 and, hence, there is no likelihood that muddy water enters the clearances.

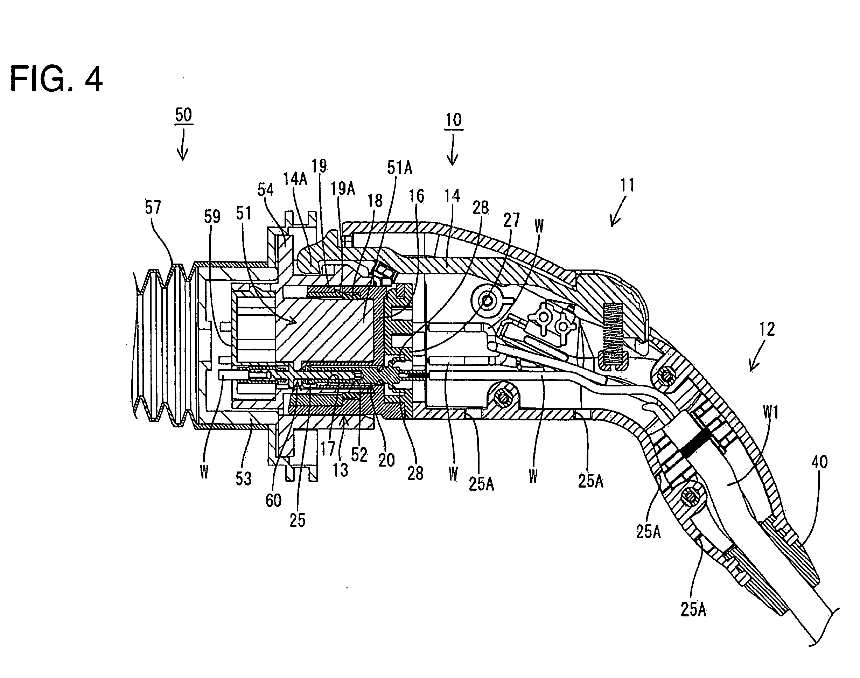

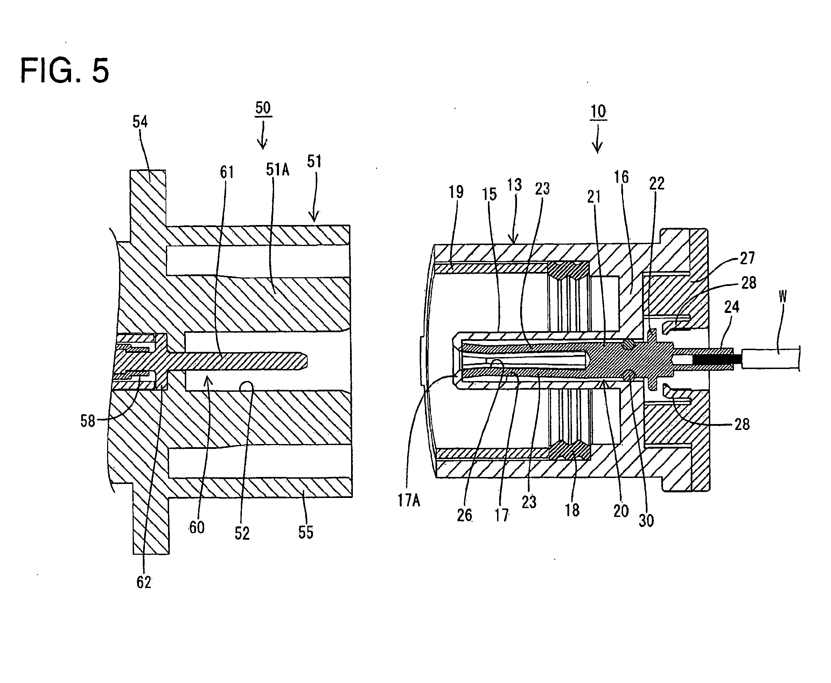

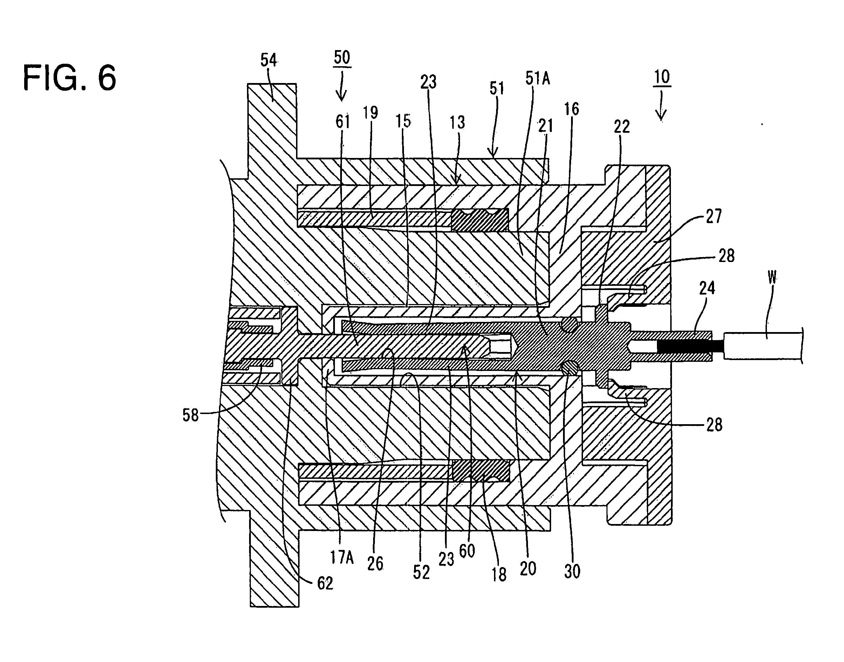

FIGS. 5 and 6 are sections enlargedly and simply showing the surrounding of the terminal fitting 20 in FIGS. 3 and 4. As shown in FIG. 5, in a state before connection to the vehicle-side terminal 60, the respective contact pieces 23 of the terminal fitting 20 particularly are so formed as to moderately approach an axial center from a base end portion toward a leading end portion and then move away from the axial center at the leading end portion. In other words, the contact pieces 23 are formed to have a substantially mountain shape whose peak is near the axial center of the female-side main portion 21, and the position of the peak is arranged at the leading end portion. That is, a contact portion 26 of the terminal fitting 20 particularly is formed by the peaks of the plurality of contact pieces 23, and an inner diameter in this contact portion 26 is set to be smaller than an outer diameter of the male-side main portion 61 of the vehicle-side terminal 60. Thus, when the vehicle-side terminal 60 is at least partly fitted into the terminal fitting 20, the male-side main portion 61 of the vehicle-side terminal 60 and the respective contact pieces 23 slide at the contact portion 26 and the vehicle-side terminal 60 and the terminal fitting 20 are electrically conductively connected with the respective contact pieces 23 resiliently deformed radially outwardly.

Here, since a frictional force between the male-side main portion 61 and the contact portion 26 particularly is larger than the reaction force received from the wire W, the male-side main portion 61 and the respective contact pieces 23 slide at the contact portion 26 and the terminal fitting 20 substantially is pushed backward. When the respective contact pieces 23 and the male-side main portion 61 slide, even if dust or the like should deposit on terminal surfaces, it can be wiped off by a wiping effect.

The terminal fitting 20 can move back and forth between a frontmost position and a rearmost position as being connected to and separated from the vehicle-side terminal 60. The frontmost position means the position of the terminal fitting 20 in a state of FIG. 5 (FIG. 3) (where the front end of the female-side main portion 21 and the front wall 17A of the cavity 17 are in contact) and the rearmost position means the position of the terminal fitting 20 in a state of FIG. 6 (FIG. 4) (where the female-side flange portion 22 and the both retaining pieces 28 are in contact). In other words, when the vehicle-side terminals 60 and the terminal fittings 20 are connected as the two connectors 10, 50 are connected, the terminal fittings 20 move or can move substantially along the longitudinal direction (particularly from the frontmost positions to the rearmost positions) particularly by frictional forces produced at the contact portions 26. Contrary to this, when the vehicle-side terminals 60 are separated from the terminal fittings 20 as the two connectors 10, 50 are separated, the terminal fittings 20 substantially are moved in an opposite direction (particularly from the rearmost positions to the frontmost positions) by frictional forces produced at the contact portions 26.

Next, functions of this embodiment constructed as described above are described. First of all, when particularly being at the frontmost position, the terminal fitting 20 is biased substantially forward by the reaction force of the wire W against the frictional force of the seal ring 30 as shown in FIG. 5, wherefore the front end of the female-side main portion 21 and the front wall 17A of the cavity 17 are in contact. Thus, substantially no clearance is formed between the front end of the female-side main portion 21 and the front wall 17A of the cavity 17 and there is no or very little likelihood that muddy water enters the clearance. Therefore, connection reliability that can endure a muddy water test can be obtained.

Next, when the two connectors 10, 50 are connected, the one or more male-side male portions 61 at least partly enter between the one or more corresponding contact pieces 23 and the one or more respective contact pieces 23 are resiliently deformed substantially outwardly, whereby the one or more male-side male portions 61 and the one or more respective contact pieces 23 are electrically conductively connected at the one or more contact portions 26. During this time, frictional forces are produced by the contact of the male-side male portion(s) 61 and the respective contact piece(s) 23, and the one or more terminal fittings 20 are moved rearward (at least partly from the frontmost positions to the rearmost positions) by these frictional forces. When the one or more terminal fittings 20 particularly reach the rearmost positions, the one or more female-side flange portions 22 come into contact with the one or more leading ends of the one or more corresponding pairs of retaining pieces 28, thereby preventing any further backward movements of the one or more terminal fittings 20. If the vehicle-side terminals 60 are further connected to the terminal fittings 20, the male-side male portions 61 and the respective contact pieces 23 slide at the contact portions 26 and dust or the like depositing on the terminal surfaces are removed by the wiping effect.

Next, when the two connectors 10, 50 are separated, the oneor more terminal fittings 20 substantially move forward (particularly from the rearmost positions to the frontmost positions) by frictional forces at the one or more contact portions 26. When the terminal fittings 20 particularly reach the frontmost positions, the front ends of the female-side main portions 21 substantially come into contact with the front walls 17A of the cavities 17 before the female-side flange portions 22 come into contact with the rear end opening edges of the cavities 17, thereby preventing any further forward movements of the terminal fittings 20. If the vehicle-side terminals 60 are further separated from the terminal fittings 20, the one or more male-side male portions 61 and the one or more respective contact pieces 23 slide at the one or more contact portions 26 and the one or more respective contact pieces 23 resiliently at least partly return when the one or more male-side male portions 61 pass the contact portions 26.

As described above, according to this embodiment, the one or more terminal fittings 20 are biased substantially forward (or toward the vehicle-side connector 50) by receiving the reaction forces of the wires W before the two connectors 10, 50 are connected. Thus, the one or more terminal fittings 20 particularly are arranged at the frontmost positions and the front ends of the female-side main portions 21 and the front walls 17A of the cavities 17 are held in contact. Therefore, no clearances are formed between the front ends of the female-side main portions 21 and the front walls 17 of the cavities 17, thereby preventing entrance of muddy water into these clearances. Hence, durability performance that can endure the muddy water test can be obtained.

When the two connectors 10, 50 are connected, the one or more terminal fittings 20 are pushed to the rearmost positions by the frictional forces between the one or more male-side male portions 61 and the one or more respective contact pieces 23 and/or the one or more female-side flange portions 22 come into contact with the one or more corresponding (particularly pairs of) retaining pieces 28 to prevent the one or more terminal fittings 20 from moving any further backward. By sliding movements of the male-side male portions 61 and the contact pieces 23, dust or the like depositing on the terminal surfaces particularly can be removed. Further, since the terminal fittings 20 move back and forth between the frontmost positions and the rearmost positions, the retaining pieces 28 can be resiliently deformed and restored while the leading ends thereof are displaced along their pivot paths.

Accordingly, to efficiently drain water (particularly muddy water) to the outside of a cavity by eliminating a clearance, thereby protecting terminal surfaces, a charging connector 10 is provided with one or more terminal fittings 20 each including a main portion 21 connectable to a vehicle-side terminal 60 and having an end of a wire W connected to (particularly the rear end of) the main portion 21, one or more terminal accommodating portions 15 internally formed with one or more cavities 17 for at least partly accommodating the terminal fittings 20, one or more seal rings 30 to be sandwiched between substantially facing surfaces of inner walls of the cavities 17 and the main portions 21 to seal between the facing surfaces over the entire circumference and a wire accommodating portion 11, 12 particularly provided behind the terminal accommodating portions 15 for at least partly accommodating the one or more wires W in a state where reaction forces capable of pushing the one or more terminal fittings 20 substantially forward are produced. The (particularly each) terminal fitting 20 is constantly biased forward by the reaction force of the wire W against a frictional force with the seal ring 30, thereby particularly being arranged at a frontmost position where the front end of the main portion 21 and a front wall 17A of the cavity 17 facing the front end of the main portion 21 substantially are in contact.

### <Other Embodiments>

The present invention is not limited to the above described and illustrated embodiment. For example, the following embodiments are also included in the technical scope of the present invention.
(1) Although the terminal fitting 20 is movable back and forth between the frontmost position and the rearmost position in the above embodiment, it may substantially not be moved in forward and backward directions according to the present invention. In other words, the frontmost and rearmost positions may be the same position.
(2) Although the retaining pieces are illustrated as a retaining portion in the above embodiment, a side retainer or the like may be used as the retaining portion.
(3) Although so-called slotted terminals are illustrated as the terminal fittings in the above embodiment, the terminal fittings may be such that a resilient contact piece is formed in a (particularly substantially rectangular or polygonal) tube portion according to the present invention.

### LIST OF REFERENCE NUMERALS

- 10: ... charging connector
- 11: ... connector main body (wire accommodating portion)
- 12: ... grip (wire accommodating portion)
- 15: ... terminal accommodating portion
- 17: ... cavity
- 17A: ... front wall
- 20: ... terminal fitting
- 21: ... female-side main portion
- 22: ... female-side flange portion
- 23: ... contact piece
- 28: ... retaining piece (retaining portion)
- 30: ... seal ring (seal member)
- 50: ... vehicle-side connector
- 60: ... vehicle-side terminal
- W: ... wire

## Claims

1. A charging connector (10) connectable to a vehicle-side connector (50) provided in or at a vehicle, comprising:
a terminal fitting (20) including a main portion (21) connectable to a vehicle-side terminal (60) provided in the vehicle-side connector (50) and having an end of a wire (W) connected to the main portion (21),
a terminal accommodating portion (15) internally formed with a cavity (17) for at least partly accommodating the terminal fitting (20),
a seal member (30) able to seal the terminal fitting (20), and
a wire accommodating portion (11) provided behind the terminal accommodating portion (15) for at least partly accommodating the wire (W) in a state where a reaction force capable of pushing the terminal fitting (20) substantially forward is produced,
**characterised in that** the terminal fitting (20) is constantly biased substantially forward by the reaction force of the wire (W) against a frictional force with the seal member (30).

2. A charging connector according to claim 1, wherein the seal member (30) is to be sandwiched between facing surfaces of an inner wall of the cavity (17) and the main portion (21) to seal between the facing surfaces over the entire circumference.

3. A charging connector according to any one of the preceding claims, wherein the terminal fitting (20) being constantly biased substantially forward by the reaction force of the wire (W) against a frictional force with the seal member (30) causes the terminal fitting (20) to be arranged at a frontmost position where the front end of the main portion (21) and the front wall (17A) of the cavity (17) facing the front end of the main portion (21) substantially are in contact.

4. A charging connector according to any one of the preceding claims, further comprising a retaining portion (28) provided behind the terminal accommodating portion (15) for retaining the terminal fitting (20) at least partly accommodated in the cavity (17) by being engaged from behind with a flange portion (22) circumferentially provided to project from the terminal fitting (20), preferably from the outer circumferential surface of the main portion (21) thereof.

5. A charging connector according to claim 4, wherein, in a state where the vehicle-side terminal (60) at least partly is fitted in the main portion (21), the terminal fitting (20) is arranged at a rearmost position where the flange portion (22) and the retaining portion (28) are engaged.

6. A charging connector according to any one of the preceding claims, wherein:
the main portion (21) includes at least one contact piece (23) which resiliently comes into contact with the vehicle-side terminal (60), and
the vehicle-side terminal (60) and the contact piece (23) slide as the vehicle-side terminal (60) and the main portion (21) are connected and separated.

7. A charging connector according to any one of the preceding claims, wherein the terminal fitting (20) is movable back and forth between the frontmost position and the rearmost position as being connected to and separated from the vehicle-side terminal (50).

8. A charging connector according to any one of the preceding claims, wherein a frictional force between the vehicle-side terminal (60) and the main portion (21) is larger than the reaction force received from the wire (W).

9. A charging connector according to any one of the preceding claims, wherein the frictional force of the seal member (30) is adjusted by an oil or lubricant content amount thereof.

10. A method of providing a charging connector (10) in view of connecting it to a vehicle-side connector (50) provided in or at a vehicle, comprising the following steps:
providing a terminal fitting (20) including a main portion (21) connectable to a vehicle-side terminal (60) provided in the vehicle-side connector (50) and having an end of a wire (W) connected to the main portion (21),
internally forming a terminal accommodating portion (15) with a cavity (17) for at least partly accommodating the terminal fitting (20),
sealing the terminal fitting (20) by means of a seal member (30),
providing a wire accommodating portion (11) behind the terminal accommodating portion (15) for at least partly accommodating the wire (W) in a state where a reaction force capable of pushing the terminal fitting (20) substantially forward is produced, and **characterised in that** it is
constantly biasing the terminal fitting (20) substantially forward by the reaction force of the wire (W) against a frictional force with the seal member (30).

11. A method according to claim 10, wherein the seal member (30) is sandwiched between facing surfaces of an inner wall of the cavity (17) and the main portion (21) to seal between the facing surfaces over the entire circumference.

12. A method according to claim 10 or 11, wherein by constantly biasing the terminal fitting (20) substantially forward by the reaction force of the wire (W) against a frictional force with the seal member (30) the terminal fitting (20) is arranged at a frontmost position where the front end of the main portion (21) and the front wall (17A) of the cavity (17) facing the front end of the main portion (21) substantially are in contact.

13. A method according to any one of the preceding claims 10 to 12, further comprising a step of providing a retaining portion (28) behind the terminal accommodating portion (15) for retaining the terminal fitting (20) at least partly accommodated in the cavity (17) by being engaged from behind with a flange portion (22) circumferentially provided to project from the terminal fitting (20), preferably from the outer circumferential surface of the main portion (21) thereof,
wherein, in a state where the vehicle-side terminal (60) at least partly preferably is fitted in the main portion (21), the terminal fitting (20) is arranged at a rearmost position where the flange portion (22) and the retaining portion (28) are engaged.

14. A method according to any one of the preceding claims 10 to 13, wherein:
the main portion (21) includes at least one contact piece (23) which resiliently comes into contact with the vehicle-side terminal (60), and
the vehicle-side terminal (60) and the contact piece (23) slide as the vehicle-side terminal (60) and the main portion (21) are connected and separated.

15. A method according to any one of the preceding claims 10 to 14, wherein a frictional force between the vehicle-side terminal (60) and the main portion (21) is larger than the reaction force received from the wire (W) and/or wherein the frictional force of the seal member (30) is adjusted by an oil or lubricant content amount thereof.

## Patentansprüche

1. Ladeverbinder (10), der mit einem fahrzeugseitigen Verbinder (50) verbindbar ist, der in oder an einem Fahrzeug vorgesehen ist, umfassend:
ein Anschlusspassstück bzw. -kontakt (20), das bzw. der einen Hauptabschnitt (21) enthält, der mit einem fahrzeugseitigen Anschluss (60) verbindbar ist, der in dem fahrzeugseitigen Verbinder (50) vorgesehen ist und ein Ende eines Drahts (W) mit dem Hauptabschnitt (21) verbunden aufweist,
einen Anschlussaufnahmeabschnitt (15), der integral bzw. einstückig mit einem Hohlraum (17) zum zumindest teilweisen Aufnehmen des Anschlusspassstücks bzw. -kontakts (20) gebildet ist,
ein Dichtungsglied (30), das fähig Lage ist, das Anschlusspassstück bzw. -kontakt (20) abzudichten, und
einen Drahtaufnahmebschnitt (11), der hinter dem Anschlussaufnahmeabschnitt (15) zum zumindest teilweisen Aufnehmen des Drahts (W) in einem Zustand vorgesehen ist, wo eine Reaktionskraft erzeugt wird, die in der Lage ist, das Anschlusspassstück bzw. -kontakt (20) im Wesentlichen nach vorne zu drücken, **dadurch gekennzeichnet, dass**
das Anschlusspassstück bzw. -kontakt (20) durch die Reaktionskraft des Drahts (W) konstant im Wesentlichen nach vorne bzw. vorwärts gegen eine Reibungskraft mit dem Dichtungsglied (30) vorgespannt wird.

2. Ladeverbinder nach Anspruch 1, wobei das Dichtungsglied (30) zwischen zugewandten Flächen bzw. Oberflächen einer Innenwand des Hohlraums (17) und des Hauptabschnitts (21) anzuordnen ist, um zwischen den zugewandten Flächen bzw. Oberflächen über den gesamten Umfang abzudichten.

3. Ladeverbinder nach einem der vorhergehenden Ansprüche, wobei, dass das Anschlusspassstück (20) durch die Reaktionskraft des Drahts (W) konstant im Wesentlichen nach vorne bzw. vorwärts gegen eine Reibungskraft mit dem Dichtungsglied (30) vorgespannt wird, bewirkt, dass das Anschlusspassstück (20) an einer vordersten Position angeordnet ist, wo das vordere Ende des Hauptabschnitts (21) und die vordere Wand (17A) des Hohlraums (17), die dem vorderen Ende des Hauptabschnitts (21) zugewandt ist, im Wesentlichen in Kontakt sind.

4. Ladeverbinder nach einem der vorhergehenden Ansprüche, ferner umfassend einen Rückhalteabschnitt (28), der hinter dem Anschlussaufnahmeabschnitt (15) vorgesehen ist, um das Anschlusspassstück (20) zurückzuhalten, das zumindest teilweise in dem Hohlraum (17) aufgenommen ist, und zwar durch Ineingriffgenommenwerden von hinten mit einem Flanschabschnitt (22), der umfangsmäßig vorgesehen ist, um von dem Anschlusspassstück (20) vorzuspringen, vorzugsweise von der Außenumfangsfläche bzw. -oberfläche des Hauptabschnitts (21) davon.

5. Ladeverbinder nach Anspruch 4, wobei in einem Zustand, wo der fahrzeugseitige Anschluss (60) zumindest teilweise in den Hauptabschnitt (21) gepasst ist, das Anschlusspassstück (20) an einer hintersten Position angeordnet ist, wo der Flanschabschnitt (22) und der Rückhalteabschnitt (28) in Eingriff sind.

6. Ladeverbinder nach einem der vorhergehenden Ansprüche, wobei:
der Hauptabschnitt (21) zumindest ein Kontaktstück (23) enthält, das rückstellfähig mit dem fahrzeugseitigen Anschluss (60) in Kontakt kommt, und
der fahrzeugseitige Anschluss (60) und das Kontaktstück (23) gleiten, wenn der fahrzeugseitige Anschluss (60) und der Hauptabschnitt (21) verbunden und getrennt werden.

7. Ladeverbinder nach einem der vorhergehenden Ansprüche, wobei das Anschlusspassstück (20) vor und zurück zwischen der vordersten Position und der hintersten Position beweglich bzw. bewegbar ist, wenn es mit dem fahrzeugseitigen Anschluss (50) verbunden und von diesem getrennt wird.

8. Ladeverbinder nach einem der vorhergehenden Ansprüche, wobei eine Reibungskraft zwischen dem fahrzeugseitigen Anschluss (60) und dem Hauptabschnitt (21) größer ist als die von dem Draht (W) empfangene Reaktionskraft.

9. Ladeverbinder nach einem der vorhergehenden Ansprüche, wobei die Reibungskraft des Dichtungsglieds (30) durch eine Öl- oder Schmiermittelgehaltmenge davon eingestellt wird.

10. Verfahren zum Bereitstellen eine Ladeverbinders (10) angesichts eines Verbindens desselben mit einem fahrzeugseitigen Verbinder (50), der in oder an einem Fahrzeug vorgesehen ist, umfassend die folgenden Schritte:
Bereitstellen eines Anschlusspassstücks bzw. -kontakts (20), das bzw. der einen Hauptabschnitt (21) enthält, der mit einem fahrzeugseitigen Anschluss (60) verbindbar ist, der in dem fahrzeugseitigen Verbinder (50) vorgesehen ist und ein Ende eines Drahts (W) mit dem Hauptabschnitt (21) verbunden aufweist,
internes Bilden eines Anschlussaufnahmeabschnitts (15) mit einem Hohlraum (17) zum zumindest teilweisen Aufnehmen des Anschlusspassstücks bzw. -kontakts (20),
Abdichten des Anschlusspassstück bzw. -kontakt (20) mittels eines Dichtungsglieds (30),
Bereitstellen eines Drahtaufnahmebschnitts (11) hinter dem Anschlussaufnahmeabschnitt (15) zum zumindest teilweisen Aufnehmen des Drahts (W) in einem Zustand, wo eine Reaktionskraft erzeugt wird, die in der Lage ist, das Anschlusspassstück bzw. -kontakt (20) im Wesentlichen nach vorne zu drükken, **dadurch gekennzeichnet, dass** er bzw. es
das Anschlusspassstück bzw. -kontakt (20) durch die Reaktionskraft des Drahts (W) konstant im Wesentlichen nach vorne bzw. vorwärts gegen eine Reibungskraft mit dem Dichtungsglied (30) vorspannt.

11. Verfahren nach Anspruch 10, wobei das Dichtungsglied (30) zwischen zugewandten Flächen bzw. Oberflächen einer Innenwand des Hohlraums (17) und des Hauptabschnitts (21) angeordnet wird, um zwischen den zugewandten Flächen bzw. Oberflächen über den gesamten Umfang abzudichten.

12. Verfahren nach Anspruch 10 oder 11, wobei durch konstantes Vorspannen des Anschlusspassstücks (20) im Wesentlichen nach vorne bzw. vorwärts durch die Reaktionskraft des Drahts (W) gegen eine Reibungskraft mit dem Dichtungsglied (30) das Anschlusspassstück (20) an einer vordersten Position angeordnet wird, wo das vordere Ende des Hauptabschnitts (21) und die vordere Wand (17A) des Hohlraums (17), die dem vorderen Ende des Hauptabschnitts (21) zugewandt ist, im Wesentlichen in Kontakt sind.

13. Verfahren ach einem der vorhergehenden Ansprüche 10 bis 12, ferner umfassend einen Schritt des Bereitstellens eines Rückhalteabschnitts (28) hinter dem Anschlussaufnahmeabschnitt (15), um das Anschlusspassstück (20) zurückzuhalten, das zumindest teilweise in dem Hohlraum (17) aufgenommen ist, und zwar durch Ineingriffgenommenwerden von hinten mit einem Flanschabschnitt (22), der umfangsmäßig vorgesehen ist, um von dem Anschlusspassstück (20) vorzuspringen, vorzugsweise von der Außenumfangsfläche bzw. -oberfläche des Hauptabschnitts (21) davon,
wobei in einem Zustand, wo der fahrzeugseitige Anschluss (60) zumindest teilweise in den Hauptabschnitt (21) gepasst ist, das Anschlusspassstück (20) an einer hintersten Position angeordnet ist, wo der Flanschabschnitt (22) und der Rückhalteabschnitt (28) in Eingriff sind.

14. Verfahren nach einem der vorhergehenden Ansprüche 10 bis 13, wobei:
der Hauptabschnitt (21) zumindest ein Kontaktstück (23) enthält, das rückstellfähig mit dem fahrzeugseitigen Anschluss (60) in Kontakt kommt, und
der fahrzeugseitige Anschluss (60) und das Kontaktstück (23) gleiten, wenn der fahrzeugseitige Anschluss (60) und der Hauptabschnitt (21) verbunden und getrennt werden.

15. Verfahren nach einem der vorhergehenden Ansprüche 10 bis 14, wobei eine Reibungskraft zwischen dem fahrzeugseitigen Anschluss (60) und dem Hauptabschnitt (21) größer ist als die von dem Draht (W) empfangene Reaktionskraft und/oder wobei die Reibungskraft des Dichtungsglieds (30) durch eine Öl- oder Schmiermittelgehaltmenge davon eingestellt wird.

## Revendications

1. Connecteur de chargement (10) pouvant être connecté à un connecteur côté véhicule (50) prévu dans ou au niveau d'un véhicule, comprenant :
une garniture terminale (20) incluant une portion principale (21) pouvant être connectée à une borne côté véhicule (60) prévue dans le connecteur côté véhicule (50) et ayant une extrémité d'un fil électrique (W) connectée à la portion principale (21),
une portion de logement de borne (15) formée de manière interne avec une cavité (17) pour recevoir au moins partiellement la garniture terminale (20),
un élément d'étanchéité (30) capable d'étanchéifier la garniture terminale (20), et
une portion de logement de fil électrique (11) prévue derrière la portion de logement de borne (15) pour recevoir au moins partiellement le fil électrique (W) dans un état où une force de réaction capable de pousser la garniture terminale (20) essentiellement vers l'avant est produite, **caractérisé en ce que** la garniture terminale (20) est constamment inclinée essentiellement vers l'avant par la force de réaction du fil électrique (W) à l'encontre d'une force de friction avec l'élément d'étanchéité (30).

2. Connecteur de chargement selon la revendication 1, dans lequel l'élément d'étanchéité (30) doit être mis en sandwich entre des surfaces se faisant face d'une paroi interne de la cavité (17) et la portion principale (21) pour étanchéifier entre les surfaces se faisant face sur la circonférence entière.

3. Connecteur de chargement selon l'une quelconque des revendications précédentes, dans lequel la garniture terminale (20) qui est constamment inclinée essentiellement vers l'avant par la force de réaction du fil électrique (W) à l'encontre d'une force de friction avec l'élément d'étanchéité (30) provoque l'agencement de la garniture terminale (20) en une position la plus en avant où l'extrémité avant de la portion principale (21) et la paroi avant (17A) de la cavité (17) faisant face à l'extrémité avant de la portion principale (21) sont essentiellement en contact.

4. Connecteur de chargement selon l'une quelconque des revendications précédentes, comprenant en outre une portion de retenue (28) prévue derrière la portion de logement de borne (15) pour retenir la garniture terminale (20) reçue au moins partiellement dans la cavité (17) en étant engagée depuis l'arrière avec une portion de bride (22) prévue de manière circonférentielle pour faire saillie depuis la garniture terminale (20), de préférence depuis la surface circonférentielle externe de la portion principale (21) de celle-ci.

5. Connecteur de chargement selon la revendication 4, dans lequel, dans un état où la borne côté véhicule (60) est au moins partiellement ajustée dans la portion principale (21), la garniture terminale (20) est agencée en une position la plus en arrière où la portion de bride (22) et la portion de retenue (28) sont engagées.

6. Connecteur de chargement selon l'une quelconque des revendications précédentes, dans lequel :
la portion principale (21) inclut au moins une partie de contact (23) qui vient en contact de manière élastique avec la borne côté véhicule (60), et
la borne côté véhicule (60) et la partie de contact (23) coulissent alors que la borne côté véhicule (60) et la portion principale (21) sont connectées et séparées.

7. Connecteur de chargement selon l'une quelconque des revendications précédentes, dans lequel la garniture terminale (20) est mobile en va-et-vient entre la position la plus en avant et la position la plus en arrière alors qu'elle est connectée à et séparée de la borne côté véhicule (50).

8. Connecteur de chargement selon l'une quelconque des revendications précédentes, dans lequel une force de friction entre la borne côté véhicule (60) et la portion principale (21) est supérieure à la force de réaction reçue du fil électrique (W).

9. Connecteur de chargement selon l'une quelconque des revendications précédentes, dans lequel la force de friction de l'élément d'étanchéité (30) est ajustée par une quantité de teneur en huile ou lubrifiant de celui-ci.

10. Procédé de fourniture d'un connecteur de chargement (10) dans le but de le connecter à un connecteur côté véhicule (50) prévu dans ou au niveau d'un véhicule, comprenant les étapes suivantes consistant à :
fournir une garniture terminale (20) incluant une portion principale (21) pouvant être connectée à une borne côté véhicule (60) prévue dans le connecteur côté véhicule (50) et ayant une extrémité d'un fil électrique (W) connectée à la portion principale (21),
former de manière interne une portion de logement de borne (15) avec une cavité (17) pour recevoir au moins partiellement la garniture terminale (20),
étanchéifier la garniture terminale (20) au moyen d'un élément d'étanchéité (30),
fournir une portion de logement de fil électrique (11) derrière la portion de logement de borne (15) pour recevoir au moins partiellement le fil électrique (W) dans un état où une force de réaction capable de pousser la garniture terminale (20) essentiellement vers l'avant est produite, et **caractérisé en ce qu'**il incline constamment la garniture terminale (20) essentiellement vers l'avant par la force de réaction du fil électrique (W) à l'encontre d'une force de friction avec l'élément d'étanchéité (30).

11. Procédé selon la revendication 10, dans lequel l'élément d'étanchéité (30) est mis en sandwich entre des surfaces se faisant face d'une paroi interne de la cavité (17) et la portion principale (21) pour étanchéifier entre les surfaces se faisant face sur la circonférence entière.

12. Procédé selon la revendication 10 ou 11, dans lequel, en inclinant constamment la garniture terminale (20) essentiellement vers l'avant par la force de réaction du fil électrique (W) à l'encontre d'une force de friction avec l'élément d'étanchéité (30), la garniture terminale (20) est agencée en une position la plus en avant où l'extrémité avant de la portion principale (21) et la paroi avant (17A) de la cavité (17) faisant face à l'extrémité avant de la portion principale (21) sont essentiellement en contact.

13. Procédé selon l'une quelconque des revendications précédentes 10 à 12, comprenant en outre une étape consistant à fournir une portion de retenue (28) derrière la portion de logement de borne (15) pour retenir la garniture terminale (20) reçue au moins partiellement dans la cavité (17) en étant engagée depuis l'arrière avec une portion de bride (22) prévue de manière circonférentielle pour faire saillie depuis la garniture terminale (20), de préférence depuis la surface circonférentielle externe de la portion principale (21) de celle-ci,
dans lequel, dans un état où la borne côté véhicule (60) est de préférence au moins partiellement ajustée dans la portion principale (21), la garniture terminale (20) est agencée en une position la plus en arrière où la portion de bride (22) et la portion de retenue (28) sont engagées.

14. Procédé selon l'une quelconque des revendications précédentes 10 à 13, dans lequel :
la portion principale (21) inclut au moins une partie de contact (23) qui vient en contact de manière élastique avec la borne côté véhicule (60), et
la borne côté véhicule (60) et la partie de contact (23) coulissent alors que la borne côté véhicule (60) et la portion principale (21) sont connectées et séparées.

15. Procédé selon l'une quelconque des revendications précédentes 10 à 14, dans lequel une force de friction entre la borne côté véhicule (60) et la portion principale (21) est supérieure à la force de réaction reçue du fil électrique (W) et/ou dans lequel la force de friction de l'élément d'étanchéité (30) est ajustée par une quantité de teneur en huile ou lubrifiant de celui-ci.
